# EUROPEAN PATENT SPECIFICATION

(11) **EP 1 498 329 B1**
(45) Date of publication and mention of the grant of the patent: **03.01.2007**
(21) Application number: 04380146.3
(22) Date of filing: 15.07.2004
(51) Int. Cl.: B60S 1/04

(54) **Support for fixing windshield wiper drive devices**
Befestigungsanordnung zum Fixieren von Scheibenwischerantriebvorrichtungen
Support pour fixer des dispositifs d'entraînement d'essuie-glace

(30) Priority: 17.07.2003 ES 200301713 U
(43) Date of publication of application: 19.01.2005
(73) Proprietor: Seat, S.A., 08040 Barcelona (ES)
(72) Inventor: Emmanuel Jund, Jean-Christophe, 08760 Martorell (Barcelona) (ES); Escribano Felguera, Juan de Dios, 08760 Martorell (Barcelona) (ES)
(74) Representative: Carvajal y Urquijo, Isabel

(56) References cited:
- FR-A- 2 745 250
- FR-A- 2 767 102
- GB-A- 1 470 576

## Description

### Field of the Invention

The present invention relates to a support for fixing windshield wiper drive devices in automotive vehicles.

### Background of the Invention

Windshield wiper drive devices are assembled on the lower portion of the front window of the vehicle. Said devices are generally situated under the hood and cause unavoidable vibrating motions. As a result, the correct and suitable fixing of such devices is of special importance.

Windshield wiper devices generally comprise an electric motor with its corresponding guide of the shaft, a mechanism transmitting the rotary motions of said shaft into reciprocating motions of the windshield wiper arm by means of a transmission shaft and a casing covering and protecting them. Said casing has a projection at one of its ends covering the guide of the electric motor shaft.

At the other end of said casing project several fixing pivots. Such an arrangement is disclosed in document GB1470576.

In most vehicles, the fixing of windshield wiper drive devices is constructed on the basis of an auxiliary plate secured at one of its sides to the drive device and to the rest of the vehicle at the other side. However, said plate has drawbacks because it considerably increases the final size of the drive device, causing problems of space and, therefore, greater difficulties during assembly. Another added drawback is the increase of the final weight and the additional cost this represents.

It was therefore necessary to provide a support for fixing drive devices which eliminated said drawbacks.

### Description of the Invention

The present invention relates to a support fixing the windshield wiper drive device in automotive vehicles by means of a firm securing thereof to the body and, at the same time, said support provides a considerable savings of space and facilitating in the assembly of the vehicle.

Said support firmly fixes the windshield wiper drive device by means of three fixing points, without the necessity of using intermediate auxiliary plates.

One of the fixing points is achieved from the projection covering the guide of the electric motor shaft. Said projection projects at one of the ends of the casing of the drive device. The other two fixing points are achieved from pivots projecting at the other end of the casing.

The support for fixing the windshield wiper drive device of the present invention is characterized in that it comprises a first cross member or plate and a second cross member or plate, both distant from and notably perpendicular to one another.

The first cross member or plate is fixed, at one of its sides and in a notably vertical position, to the vehicle body and, in turn, is provided, at another one of its sides, with a notch through which the guide of the electric motor rotating shaft is introduced so that the windshield wiper drive device is fixed at one of its ends. This fixing point is distant from the shaft transmitting the reciprocating motion of the windshield wiper arm, thus achieving a minimum value of parasitic motions of said axis.

The second cross member or plate is also fixed to the vehicle body, in a notably horizontal position, and is provided with two holes facing two pivots with internal thread projecting from the casing, being fixed by means of screws, and achieving the fixing at the other end of the windshield wiper drive device.

### Brief Description of the Drawings

A figure is attached to the present specification as an integral part thereof, which, with an illustrative and never limiting character, shows the following:

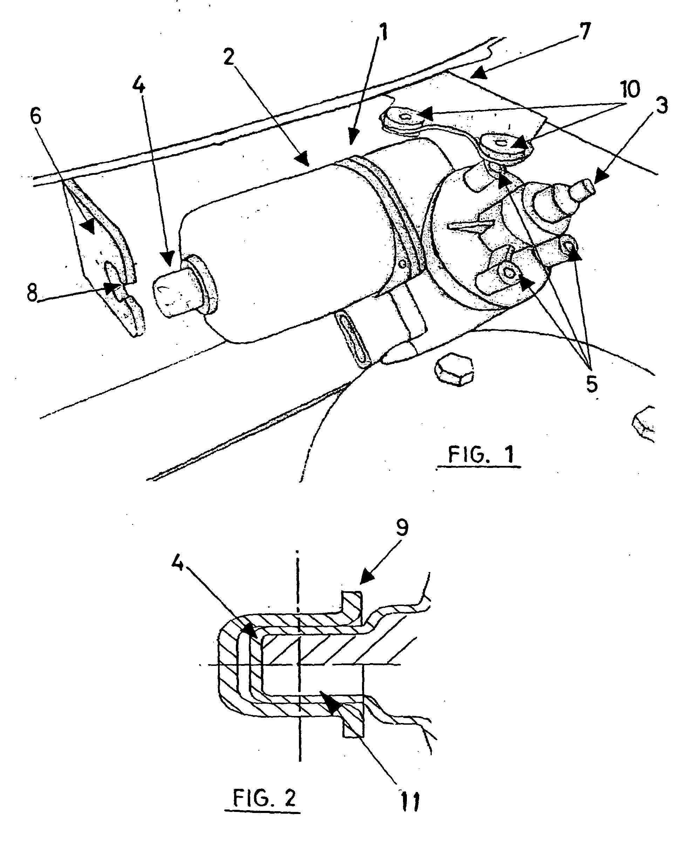

Figure 1 shows the support for fixing the windshield wiper drive device of the present invention.
Figure 2 shows a section of the member covering the projection situated on one end of the casing.

### Preferred Embodiment of the Invention

To better explain the invention, a preferred embodiment is described below with a descriptive and never limiting character.

The present invention relates to a support for fixing a windshield wiper drive device in automotive vehicles. Drive devices (1) refer to those devices comprising a casing (2) housing an electric motor and a transmission mechanism, which have not been shown in the figure, connected to the windshield wiper arm by means of a transmission shaft (3). A projection (4) covering the guide (11) of the electric motor shaft projects at one of the ends of the casing (2), allowing for the rotation of the motor shaft but not its translation. At the other end of the casing (2), several pivots (5) with internal thread project on the upper portion. However, there can be casings (2) which, rather than pivots (5), are provided with any projection or opening susceptible to being fixed by the support of the present invention.

The device for fixing drive devices (1) is characterized in that it comprises a first cross member or plate (6) and a second cross member or plate (7) which are situated on perpendicular planes and distant from one another. The spacing between the first cross member (6) and second cross member (7) is determined by the distance between the projection (4) of the casing covering the guide and the other end of the casing from where the pivots (5) with internal thread, or any other projecting member, project.

The first cross member or plate (6) is fixed to the body in a vertical position and is provided with a notch (8) through which the projection (4) of the casing covering the guide of the electric motor shaft is introduced. The projection (4) is covered with a covering member (9) for absorbing the vibrations of the electric motor. Thus, a first fixing point of the drive device (1) is provided which is distant from the transmission shaft (3) transmitting the reciprocating motion of the windshield wiper arm, thereby producing a minimum value of the moments caused by the weight of the casing (2).

The second cross member (7) is also fixed to the body, but in a horizontal position, such that it is on a plane parallel to the casing (2), said second cross member being provided with two openings (10) facing two of the pivots (5) projecting at the other end of the casing (2). The openings (10) are covered with a material absorbing the vibrations caused by the electric motor. In the final assembly position, said openings (10) and pivots (5) are fixed by means of screws. Two fixing points of the drive device (1) are produced with this second cross member (7).

Three fixing points are provided with this embodiment of the present invention without resorting to intermediate supports.

It must be noted that the present invention is not limited to the previous embodiment, therefore the scope of the present invention is limited by the content of the claims.

## Claims

1. A support for fixing windshield wiper drive devices of automotive vehicles, of those comprising a casing (2) housing an electric motor and a transmission mechanism connected by means of a transmission shaft (3) to the windshield wiper arm, from which casing (2) a projection (4) covering the guide of the motor shaft projects at one of its ends, and at the other end, several fixing pivots (5) project, **characterized in that** it comprises a first cross member (6) and a second cross member (7), notably perpendicular to one another, which first cross member (6) is fixed to the vehicle body in a vertical position and is provided with a notch (8) through which the projection (4) of the casing (2) is introduced, and which second cross member (7), also fixed to the body but in a horizontal position, is provided with two openings (10) facing two of the pivots (5) for their fixing thereto by means of two screws, the notch (8) and the two openings (9) defining said three fixing points distant from one another and situated on two notably perpendicular planes.

2. A support for fixing windshield wiper drive devices according to claim 1, **characterized in that** a covering member (10) absorbing vibrations is used on the projection (4) of the casing (2).

## Patentansprüche

1. Halter zum Befestigen von Scheibenwischer-Antriebsvorrichtungen für Kraftfahrzeuge, wobei die Vorrichtungen ein Gehäuse (2) für die Aufnahme eines Elektromotors und eines Getriebemechanismus aufweisen, die über eine Getriebewelle (3) mit dem Scheibenwischerarm verbunden sind, und wobei von dem Gehäuse (2) ein die Führung der Motorwelle bedeckender Vorsprung (4) an einem seiner Enden vorsteht, während am anderen Ende mehrere Befestigungsachsen (5) abstehen, **dadurch gekennzeichnet, dass** der Halter ein erstes Querelement (6) und ein zweites Querelement (7) aufweist, die im Wesentlichen senkrecht zueinander sind, wobei das erste Querelement (6) an der Fahrzeugkarosserie in einer vertikalen Stellung befestigt und mit einer Aussparung (8) versehen ist, durch welche der Vorsprung (4) des Gehäuses (2) eingeführt ist, während das zweite Querelement (7) ebenfalls an der Karosserie, jedoch in einer horizontalen Position befestigt und mit zwei Öffnungen (10) versehen ist, die zwei der Achsen (5) für ihre Befestigung daran mit Hilfe von zwei Schrauben vorgesehen sind, und wobei die Aussparung (8) und die beiden Öffnungen (9) die drei Befestigungspunkte bilden, die im Abstand voneinander angeordnet sind und auf zwei im Wesentlichen senkrechten Ebenen liegen.

2. Halter zum Befestigen von Scheibenwischer-Antriebsvorrichtungen nach Anspruch 1, **dadurch gekennzeichnet, dass** an dem Vorsprung (4) des Gehäuses (2) ein Abdeckelement (10) verwendet wird, das Vibrationen absorbiert.

## Revendications

1. Support pour fixer des dispositifs d'entraînement d'essuie-glace de véhicules automobiles, de ceux comprenant un boîtier (2) logeant un moteur électrique et un mécanisme de transmission relié au moyen d'un arbre de transmission (3) au bras de l'essuie-glace, boîtier (2) à partir duquel une projection (4) couvrant le guide de l'arbre moteur est projetée à une de ses extrémités, et à l'autre extrémité, plusieurs pivots de fixation (5) sont projetés, **caractérisé en ce qu'**il comprend une première traverse (6) et une seconde traverse (7), notamment perpendiculaire l'une par rapport à l'autre, laquelle première traverse (6) est fixée à la carrosserie dans une position verticale et est équipée d'une encoche (8) à travers laquelle la projection (4) du boîtier (2) est introduite, et laquelle seconde traverse (7), également fixée à la carrosserie mais dans une position horizontale, est équipée de deux ouvertures (10) faisant face à deux des pivots (5) pour leur fixation au moyen de deux vis, l'encoche (8) et les deux ouvertures (9) définissant lesdits trois points de fixation distants les uns des autres et situés sur deux plans notamment perpendiculaires.

2. Support pour fixer des dispositifs d'entraînement d'essuie-glace selon la revendication 1, **caractérisé en ce qu'**un élément de revêtement (10) absorbant des vibrations est utilisé sur la projection (4) du boîtier (2).
